# EUROPÄISCHE PATENTSCHRIFT

(11) **EP 1 358 034 B1**
(45) Veröffentlichungstag und Bekanntmachung des Hinweises auf die Patenterteilung: **27.04.2005**
(21) Anmeldenummer: 02710659.0
(22) Anmeldetag: 31.01.2002
(51) Int. Cl.: B23K 1/00, B23K 10/02

(54) **VERFAHREN ZUM LÖTEN VON WERKSTÜCKEN**
METHOD FOR SOLDERING WORK PIECES
PROCEDE DE BRASAGE DE PIECES

(30) Priorität: 09.02.2001 AT 2042001
(43) Veröffentlichungstag der Anmeldung: 05.11.2003
(73) Patentinhaber: Fronius International GmbH, 4643 Pettenbach (AT)
(72) Erfinder: MÖRTENDORFER, Bernhard, A-4551 Ried im Traunkreis (AT); GATTERBAUER, Martin, A-4600 Wels (AT)
(74) Vertreter: Secklehner, Günter, Dr.
(86) Internationale Anmeldenummer: PCT/AT2002/000036
(87) Internationale Veröffentlichungsnummer: WO 2002/064300

(56) Entgegenhaltungen:
- WO-A-98/21000
- US-A- 4 087 671
- US-A- 4 580 026
- PATENT ABSTRACTS OF JAPAN vol. 009, no. 087 (M-372), 17. April 1985 (1985-04-17) & JP 59 215267 A (HITACHI SEISAKUSHO KK), 5. Dezember 1984 (1984-12-05)

## Beschreibung

Die Erfindung betrifft ein Verfahren zum Löten von Werkstücken mit einem Brenner, insbesondere einem Plasma- oder Schweißbrenner, wie im Oberbegriff des Anspruches 1 beschrieben.

Aus der WO 98/21000 A1 ist ein Verfahren zum Löten von Werkstücken mit einem Brenner, insbesondere einem Plasmabrenner, mit einer nicht abschmelzenden Elektrode bekannt. Am Brenner wird ein übertragener oder nicht übertragener Arbeitslichtbogen, der von einer Stromquelle mit Energie gespeist wird, zur Erzeugung eines Plasmastrahls aus einem zugeführten Plasmagas aufgebaut. In den Verbindungsbereich der zu verbindenden Werkstücke wird ein Zusatzwerkstoff zugeführt, der durch die Wärmeenergie des Plasmastrahls bzw. des Arbeitslichtbogens verflüssigt wird, so daß ein Schmelzbad im Verbindungsbereich der beiden Werkstücke durch den Zusatzwerkstoff gebildet wird. Nachteilig ist hierbei, daß für die Verflüssigung des Zusatzwerkstoffes dieser eine beträchtliche Wärmeenergiemenge von dem Plasmastrahl bzw. dem Arbeitslichtbogen entzieht, so daß die Schmelzbadtemperatur wesentlich reduziert wird.

Aus der US 4 087 671 A ist weiters ein Plasma- oder Schneidgerät gezeigt, welches zum Löten von Werkstücken mit einem Brenner, insbesondere einem Plasma- oder Schneidbrenner, mit einer Elektrode geeignet ist. Der Brenner ist zum Aufbau eines übertragenen und/oder nicht übertragenen Arbeitslichtbogens zur Erzeugung eines Plasmastrabls aus einem zugeführten Plasmagas mit einer Stromquelle verbunden. Zumindest ein Zusatzwerkstoff wird in den Verbindungsbereich der zu verbindenden Werkstücke zugeführt, wobei der Zusatzwerkstoff mit der Stromquelle oder einer weiteren Stromquelle verbunden ist. Hierzu ist ein Potential der Stromquelle an dem Zusatzwerkstoff und das weitere Potential an dem Werkstück angelegt. Nachteilig ist hierbei, dass die Energieversorgung für den Zusatzwerkstoff nicht gesteuert ist, sodass es zu einer Zündung eines Lichtbogens zwischen dem Zusatzwerkstoff und dem Werkstücken kommen kann.

Der Erfindung liegt die Aufgabe zugrunde, ein Verfahren zum Löten von Werkstücken zu schaffen, bei dem die Prozeßstabilität für ein Lötverfahren verbessert wird.

Diese Aufgabe der Erfindung wird derartig gelöst, daß der Zusatzwerkstoff mit der oder einer weiteren Energiequelle bzw. Stromquelle verbunden wird und hierzu ein Potential der Energiequelle bzw. Stromquelle an dem Zusatzwerkstoff und das weitere Potential an den Werkstücken angelegt wird, wobei die Energiequelle bzw. Stromquelle, insbesondere die Energiezufuhr der Stromquelle, derart geregelt wird, daß beim Abheben des Zusatzwerkstoffes vom Werkstück eine Zündung eines Lichtbogens unterbunden wird.

Vorteilhaft ist hierbei, daß durch die Versorgung des Zusatzwerkstoffes mit Energie, insbesondere mit elektrischer Energie, dieser unabhängig von äußeren Einflüssen, insbesondere der Erwärmung über den Plasmastrahl bzw. dem Arbeitslichtbogen, eigenständig auf eine Temperatur unterhalb des Schmelzpunktes des Zusatzwerkstoffes erwärmt wird, so daß zur Umwandlung des Zusatzwerkstoffes in den flüssigen Zustand nur mehr eine sehr geringe Energieeinbringung über den Brenner, insbesondere über den aufgebauten Arbeitslichtbogen bzw. den Plasmastrahl, notwendig ist. Damit wird in vorteilhafter Weise erreicht, daß die Wärmeeinbringung über den Brenner, also die Energieversorgung des Brenners, sehr stark reduziert werden kann, so daß eine Aufschmelzung des Grundmaterials der Werkstücke verhindert wird. Ein wesentlicher Vorteil liegt darin, daß durch die sogenannte Heißdrahttechnik, also durch die Vorerwärmung des Zusatzmaterials, eine sehr hohe Schmelzbadtemperatur erreicht wird, wodurch die Benetzungsfähigkeit des flüssigen Zusatzwerkstoffes, insbesondere des Lotes, sehr verbessert wird und somit gleichzeitig die Sicherheit des Prozesses, ohne mehr Energie in das Grundmaterial der Werkstücke einzubringen, wesentlich erhöht wird. Dies wird insofern erreicht, da für die Verflüssigung des Zusatzwerkstoffes nur mehr eine sehr geringe Wärmeenergiemenge aus dem Plasmastrahl bzw. aus dem Arbeitslichtbogen entzogen wird, so daß fast die vollständige zugeführte Energiemenge von dem Plasmastrahl bzw. von dem Arbeitslichtbogen für die Erwärmung des Grundmaterials der Werkstücke und des Schmelzbades zur Verfügung steht. Ein weiterer Vorteil liegt darin, daß aufgrund der Vorerwärmung des Zusatzwerkstoffes eine bessere Abschmelzung des Zusatzwerkstoffes bewirkt wird, so daß keine Spritzer mehr entstehen.

Weitere vorteilhafte Maßnahmen sind in den Ansprüchen 2 bis 10 beschrieben. Die sich daraus ergebenden Vorteile sind aus der Beschreibung zu entnehmen.

Die Erfindung wird im nachfolgenden anhand der in den Zeichnungen dargestellten Ausführungsbeispiele näher erläutert.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: einen schaubildlichen Aufbau mit einem Plasmabrenner und den erforderlichen Komponenten zur Durchführung des Verfahrens in vereinfachter, schematischer Darstellung;
- Fig. 3: einen schaubildlichen Aufbau mit einem Schweißbrenner und den erforderlichen Komponenten zur Durchführung des Verfahrens in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

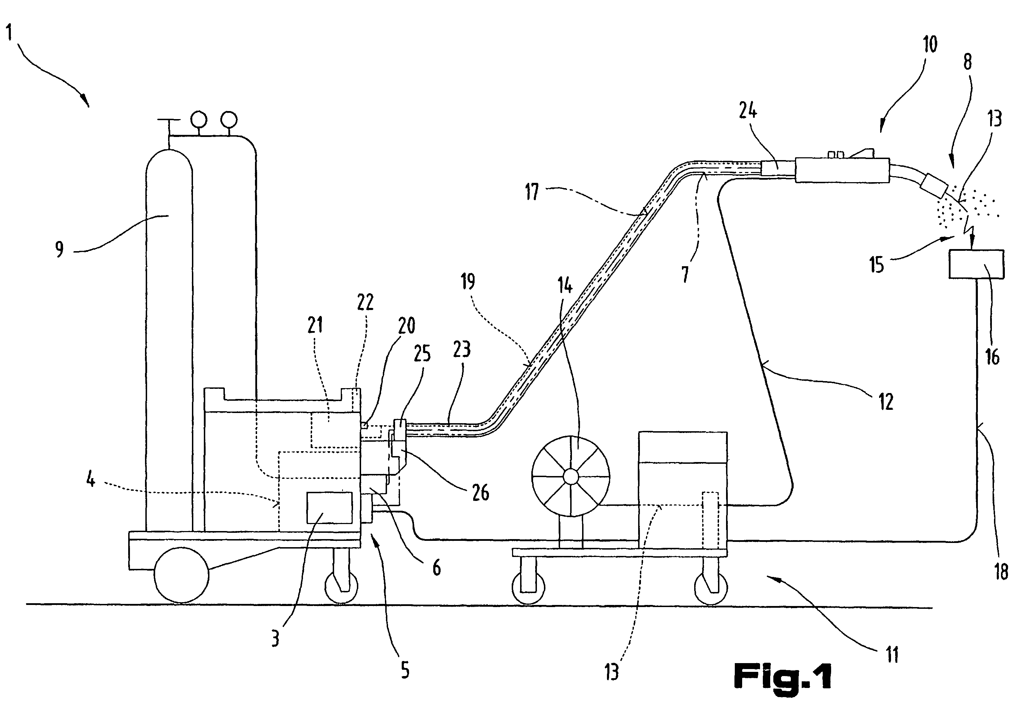

In Fig. 1 ist ein Schweißgerät 1 bzw. ein Plasmagerät für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt. Selbstverständlich ist es möglich, daß die erfindungsgemäße Lösung bei einer Stromquelle bzw. einer Schweißstromquelle eingesetzt werden kann.

Das Schweißgerät 1 bzw. das Plasmagerät umfaßt eine Energiequelle bzw. Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Brenner 10 bzw. einem Schweißbrenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 in den Bereich des Brenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, daß das Drahtvorschubgerät 11 den Schweißdraht 13 bzw. den Zusatzwerkstoff außerhalb des Brenners 10 bzw. des Schweißbrenners an die Prozeßstelle zuführt, wobei hierzu im Brenner 10 bevorzugt eine nicht abschmelzende Elektrode angeordnet ist.

Der Strom zum Aufbauen eines Lichtbogens 15, insbesondere eines Arbeitslichtbogens, zwischen dem Schweißdraht 13 bzw. der nicht abschmelzenden Elektrode und einem Werkstück 16 wird über eine Schweißleitung 17 vom Leistungsteil 3 der Stromquelle 2 dem Brenner 10, insbesondere dem Schweißdraht 13 bzw. der Elektrode, zugeführt, wobei das zu verschweißende Werkstück 16 über eine weitere Schweißleitung 18 ebenfalls mit dem Schweißgerät 1, insbesondere mit der Stromquelle 2, verbunden ist und somit über den Lichtbogen 15 für einen Prozeß ein Stromkreis aufgebaut werden kann.

Zum Kühlen des Brenners 10 kann über einen Kühlkreislauf 19 der Brenner 10 unter Zwischenschaltung eines Strömungswächters 20 mit einem Flüssigkeitsbehälter, insbesondere einem Wasserbehälter 21, verbunden werden, wodurch bei der Inbetriebnahme des Brenners 10 der Kühlkreislauf 19, insbesondere eine für die im Wasserbehälter 21 angeordnete Flüssigkeit verwendete Flüssigkeitspumpe, gestartet wird und somit eine Kühlung des Brenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 bzw. des Plasmagerätes eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Brenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Brenner 10 angeordnet. Das Schlauchpaket 23 wird über eine zum Stand der Technik zählende Verbindungsvorrichtung 24 mit dem Brenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Grundsätzlich ist zu erwähnen, daß für die unterschiedlichen Schweißverfahren bzw. Schweißgeräte, wie beispielsweise WIG-Geräte oder MIG/MAG-Geräte oder Plasmageräte, nicht alle zuvor benannten Komponenten verwendet bzw. eingesetzt werden müssen.

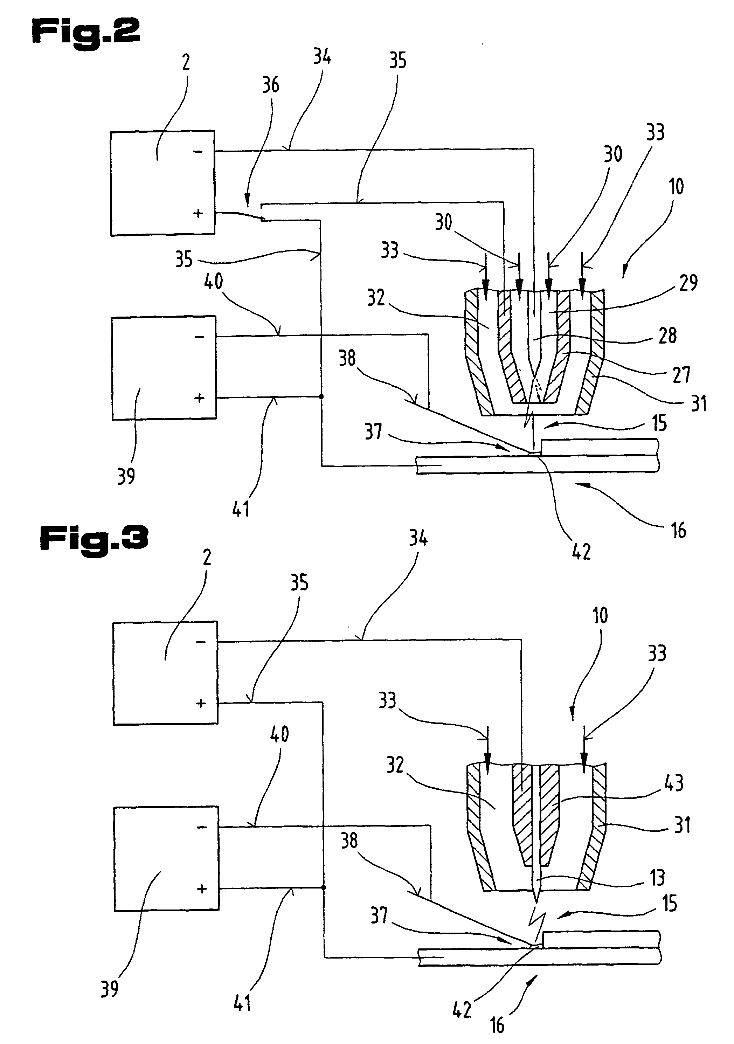

In Fig. 2 ist ein stark vereinfachter, schaubildlicher Aufbau dargestellt, bei dem der Brenner 10 aus einem handelsüblichen Plasmabrenner gebildet wird.

Der Brenner 10 weist hierzu eine Plasmadüse 27, in der eine nicht abschmelzende Elektrode 28 angeordnet ist, auf, wobei in einem Kanal 29 der Plasmadüse 27 ein extern zugeführtes Plasmagas, wie schematisch mit einem Pfeil 30 angedeutet, zugeführt wird. Weiters ist es möglich, daß die Plasmadüse 27 mit einer Gasdüse 31 umschlossen wird. Dabei wird zwischen der Plasmadüse 27 und der Gasdüse 31 wiederum ein Kanal 32 ausgebildet, der extern mit einem Schutzgas, wie schematisch mit einem Pfeil 33 angedeutet, versorgt wird.

Zur Energieversorgung wird der Brenner 10 mit der Energiequelle bzw. der Stromquelle 2 verbunden, so daß ein übertragener und/oder nicht übertragener Arbeitslichtbogen bzw. Lichtbogen 15 zur Erzeugung eines Plasmastrahls aus dem zugeführten Plasmagas aufgebaut werden kann. Hierzu ist bei dem dargestellten Ausführungsbeispiel die Energieversorgung für den Arbeitslichtbogen bzw. den Lichtbogen 15 derartig aufgebaut, daß die nicht abschmelzende Elektrode 28 mit einem, insbesondere negativen Potential 34 der Stromquelle 2 verbunden ist. Um einen übertragenen Arbeitslichtbogen aufbauen zu können, ist das weitere, insbesondere das positive Potential 35 der Stromquelle 2 an den zu verlötenden Werkstücken 16 angelegt, so daß zwischen der Elektrode 28 und den Werkstücken 16 ein übertragender Arbeitslichtbogen aufgebaut werden kann.

Damit jedoch ein nicht übertragender Lichtbogen 15 - strichliert dargestellt - aufgebaut werden kann, ist die nicht abschmelzende Elektrode 28 wiederum mit dem insbesondere negativen Potential 34 der Stromquelle 2 verbunden, wobei nunmehr die Plasmadüse 27 über eine Schaltvorrichtung 36 mit dem weiteren, insbesondere positiven Potential 35 der Stromquelle 2 verbunden ist. Damit hat der Benutzer die Möglichkeit, daß dieser nunmehr je nach Wunsch, also je nach Schaltstellung der Schaltvorrichtung 36, zwischen einem nicht übertragenen oder einem übertragenen Arbeitslichtbogen auswählen kann, so daß entsprechend dem Material der Werkstücke 16 immer die beste Arbeitsweise ausgewählt werden kann. Selbstverständlich ist es möglich, daß der Aufbau nur aus einem übertragenen oder einem nicht übertragenen oder sogar durch beide gleichzeitig realisiert werden kann.

Damit mit dem dargestellten Aufbau ein Verbindungsprozeß, insbesondere ein Lötprozeß, zwischen den beiden zu verbindenden Werkstücken 16 durchgeführt werden kann, wird in einem Verbindungsbereich 37 der zu verbindenden Werkstücke 16 ein Zusatzwerkstoff 38 zugeführt, wobei dieser in Form von einem oder mehreren Drähten, insbesondere einem oder mehreren endlosen Schweißdrähten, wie schematisch durch einen Schweißdraht angedeutet, zugeführt wird. Der Zusatzwerkstoff 38 wird bei dem dargestellten Ausführungsbeispiel mit einer weiteren Stromquelle 39 verbunden, wobei hierzu ein, insbesondere negatives Potential 40 der Stromquelle 39 an dem Zusatzwerkstoff 38 und das weitere, insbesondere positive Potential 41 an den Werkstücken 16 angelegt wird, wobei die Stromquelle 39, insbesondere die Energiezufuhr der Stromquelle 39, derart geregelt wird, daß beim Abheben des Zusatzwerkstoffes 38 vom Werkstück 16 bzw. beim Austritt aus einem Schmelzbad 42 eine Zündung eines Lichtbogens unterbunden wird.

Durch diese zusätzliche Energiezufuhr wird erreicht, daß bei einer Berührung des Zusatzwerkstoffes 38 mit dem Werkstück 16 ein Stromkreis aufgebaut wird, wobei aufgrund des eintretenden Stromflusses eine Erwärmung des Zusatzwerkstoffes 38 stattfindet. Damit also eine ständige Erwärmung des Zusatzwerkstoffes 38 zustande kommt, wird während eines Prozesses, insbesondere eines Lötprozesses, der Zusatzwerkstoff 38 mit dem Werkstück 16 bzw. dem Schmelzbad 42, welches durch den verflüssigten Zusatzwerkstoff 38 gebildet wird, kontaktiert. Selbstverständlich ist es möglich, daß anstelle einer zweiten Stromquelle 39 nur eine einzige Stromquelle 2 oder 39 eingesetzt werden kann. Hierzu wird bei Verwendung einer einzigen Stromquelle 2 oder 39 diese derart ausgebildet, daß diese zwei getrennt voneinander regelbare bzw. steuerbare Energiekreise aufweist, so daß unabhängig voneinander der Arbeitslichtbogen und der Stromkreis über den Zusatzwerkstoff 38 mit Energie versorgt werden kann.

Der Zusatzwerkstoff 38 wird mit Energie, insbesondere mit einem einstellbaren, konstanten oder gepulsten Strom, derart von der Stromquelle 39 beaufschlagt, daß eine Erwärmung des Zusatzwerkstoffes 38 bis knapp unter dessen Schmelztemperatur erreicht wird. Hierzu ist es beispielsweise möglich, daß an der Stromquelle 39 das Material des Zusatzwerkstoffes 38 eingestellt wird, so daß anschließend eine selbständige Einstellung durch entsprechend hinterlegte Werte stattfindet. Selbstverständlich ist es möglich, daß von einem Benutzer die Parameter, insbesondere die Stromhöhe, an der Stromquelle 39 direkt eingestellt werden können. Weiters wird von der Stromquelle 39 darauf geachtet, daß bei einem ungewollten Abheben des Zusatzwerkstoffes 38 vom Werkstück 16 bzw. beim Austritt aus dem Schmelzbad 42 eine Lichtbogenbildung, bei der ein Aufschmelzen des Grundmaterials der Werkstücke 16 verursacht würde, verhindert wird.

Durch die gezielte Wärmeeinbringung in den Zusatzwerkstoff 38 bzw. der Erwärmung des Zusatzwerkstoffes 38 wird die Energieversorgung des Arbeitslichtbogens, insbesondere eine Plasmalichtbogenleistung, auf einen Wert reduziert, bei dem vorwiegend eine Erwärmung des Grundmaterials der Werkstücke 16 und nur mehr eine Restenergie für das vollständige Schmelzen des Zusatzwerkstoffes 38 geliefert wird, d.h., daß die Plasmalichtbogenleistung soweit reduziert werden kann, daß durch den gebildeten Plasmastrahl bzw. durch den Arbeitslichtbogen mit Sicherheit keine Aufschmelzung des Grundmaterials der Werkstücke 16 mehr stattfindet, sondern die Werkstücke 16 nur mehr erwärmt werden. Es kann also gesagt werden, daß die Energieversorgung des Arbeitslichtbogens, insbesondere die Plasmalichtbogenleistung, derart geregelt wird, daß keine Aufschmelzung des Grundmaterials der Werkstücke 16 stattfindet.

Durch die sogenannte Heißdrahttechnik, also durch das zusätzliche Erwärmen des Zusatzwerkstoffes 38, wird eine wesentlich höhere Schmelzbadtemperatur erreicht, da gleichzeitig eine Wärmeeinbringung in das Schmelzbad 42 von dem Plasmastrahl bzw. dem Arbeitslichtbogen und dem Zusatzwerkstoff 38 erfolgt und somit nicht mehr so viel Wärme von dem Zusatzwerkstoff 38 absorbiert wird, wie wenn dieser nicht erwärmt würde, d.h., daß bei üblichen Lötverfahren, wie aus dem Stand der Technik bekannt, der Zusatzwerkstoff 38 ohne Erwärmung, also kalt, in das Schmelzbad 42 eingetaucht wird, so daß nunmehr eine große Wärmeenergieaufnahme notwendig ist, damit der Zusatzwerkstoff 38 aufgeschmolzen wird, wobei diese Wärmeenergie von dem Schmelzbad 42 bzw. dem Plasmastrahl oder dem Arbeitslichtbogen entzogen wird. Damit dies kompensiert werden kann, müßte die Wärmeenergie, insbesondere die Plasmalichtbogenleistung, erhöht werden, wobei dann nicht mehr sichergestellt ist, daß keine Aufschmelzung des Grundmaterials der Werkstücke 16 mehr stattfindet.

Aufgrund der nunmehr erreichbaren hohen Schmelzbadtemperatur wird die Benetzungsfähigkeit des Zusatzwerkstoffes 38, insbesondere des zugeführten Schweißdrahtes bzw. Lotes, sehr stark erhöht. Weiters wird die Prozeßsicherheit wesentlich verbessert, ohne daß dabei mehr Energie in den Grundwerkstoff der Werkstücke 16 eingebracht wird. Wesentlich ist bei dem erfindungsgemäßen Verfahren, daß der Zusatzwerkstoff 38 soweit vorgewärmt wird, daß nur mehr eine geringe Wärmezuführung für die Verflüssigung des Zusatzwerkstoffes 38 notwendig ist. Weiters ist es durch die hohe Schmelzbadtemperatur bzw. durch die Vorerwärmung des Zusatzwerkstoffes 38 möglich, daß nunmehr ein Zusatzwerkstoff 38 eingesetzt werden kann, dessen Schmelzpunkt gleich oder sogar höher ist, als der des Grundmaterials der Werkstücke 16, da eine eigene Erwärmung des Zusatzwerkstoffes 38 bis knapp unterhalb des Schmelzpunktes vom Zusatzwerkstoff 38 von der Stromquelle 39 durchgeführt wird und die Restenergie für die Verflüssigung des Zusatzwerkstoffes 38 über den Plasmastrahl bzw. dem Arbeitslichtbogen zugeführt wird.

Da der Funktionsablauf einem aus dem Stand der Technik bekannten Verfahren entspricht, wird auf eine detaillierte Beschreibung verzichtet. Es wird lediglich darauf hingewiesen, daß bei Lötbeginn, also bei dem Prozeßstart, beispielsweise zuerst die Stromquelle 2 für den Arbeitslichtbogen aktiviert wird, so daß zuerst der Arbeitslichtbogen aufgebaut werden kann und somit ein heißer Plasmastrahl gebildet wird. Anschließend wird das Drahtvorschubgerät 11 (in Fig. 2 nicht ersichtlich) sowie die Stromquelle 39 für den Zusatzwerkstoff 38 gestartet, so daß bei Berührung des Zusatzwerkstoffes 38 mit dem Werkstück 16 ein Stromkreis aufgebaut werden kann und somit gegebenenfalls nach Ablauf einer Aufwärmphase der Lötprozeß durchgeführt werden kann. Hierbei wird der Lötprozeß entsprechend eines Schweißprozesses durchgeführt, d.h., daß der Brenner 10 entlang der Verbindungsstelle der beiden Werkstücke 16 geführt wird, wobei hierzu ein entsprechendes Schmelzbad 42 aus dem Zusatzwerkstoff 38 gebildet wird.

Dabei ist es möglich, daß die Stromquelle 39 für den Zusatzwerkstoff 38 durch eine Konstantstromquelle mit Spannungsbegrenzung gebildet wird, damit kein Lichtbogen entsteht, wenn der Zusatzwerkstoff 38 aus dem Schmelzbad 42 heraustritt bzw. vom Werkstück 16 abhebt. Die Stromquelle 39 arbeitet dabei in einem Konstantstrombetrieb oder in einem Impulsbetrieb, wobei beim Impulsbetrieb auch ein synchrones Drahtpulsen möglich ist, d.h. daß der Zusatzwerkstoff 38 mit konstanter oder pulsförmiger Drahtfördergeschwindigkeit gefördert wird, also eine entsprechende Vorwärts/Rückwärts-Bewegung bzw. eine Vorwärts/Stopp-Bewegung des Zusatzwerkstoffes 38 durchgeführt wird.

In Fig. 3 ist weiters ein Ausführungsbeispiel gezeigt, bei dem nunmehr als Brenner 10 ein aus dem Stand der Technik bekannter Schweißbrenner eingesetzt wird. Da der grundsätzliche Aufbau eines derartigen Brenners 10 bekannt ist, wird auf diesen nicht mehr näher eingegangen.

Der Brenner 10, insbesondere der Schweißbrenner, weist dabei eine Kontaktbuchse 43 auf, durch die ein abschmelzbarer Schweißdraht 13 als Elektrode zugeführt wird, wobei die Kontaktbuchse 43 von einer Gasdüse 31 umschlossen wird. Bei dem dargestellten Ausführungsbeispiel wird der Zusatzwerkstoff 38, der wiederum mit der Stromquelle 39 verbunden ist, außerhalb des Brenners 10 in den Verbindungsbereich 37 bzw. den Werkstücken 16 zugeführt, wie dies schematisch angedeutet wird. Der Zusatzwerkstoff 38 kann dabei über eine Führungsvorrichtung, welche beispielsweise am Brenner 10 befestigt ist - nicht dargestellt - von dem Drahtvorschubgerät 11 (in Fig. 1 dargestellt) zugeführt werden.

Da bei dem erfindungsgemäßen Verfahren, wie es bereits in Fig. 2 im Detail beschrieben ist, die Plasmalichtbogenleistung derart weit gesenkt werden kann, ist es nunmehr möglich, daß als Elektrode ein abschmelzender Schweißdraht 13 dient bzw. eingesetzt werden kann, d.h., daß die Plasmalichtbogenleistung, insbesondere die Energieversorgung für den Lichtbogen 15, der zwischen dem Schweißdraht 13 und den Werkstücken 16 aufgebaut wird, derart geregelt wird, daß eine Abschmelzung des Schweißdrahtes 13 und gleichzeitig eine Aufschmelzung des Grundmaterials der Werkstücke 16 verhindert wird. Die Erwärmung des Grundmaterials der Werkstücke 16 wird nunmehr über den Lichtbogen 15 bzw. dem Plasmastrahl durchgeführt. Es kann also gesagt werden, daß als Elektrode ein abschmelzender Schweißdraht 13 eingesetzt wird, wobei die Energieversorgung des Schweißdrahtes 13 derart geregelt wird, daß eine Abschmelzung des Schweißdrahtes 13 verhindert wird, wobei durch Zuführung und Erwärmung des Zusatzwerkstoffes 38 ein Lötprozeß durchgeführt wird.

Wie bereits in Fig. 2 beschrieben, wird das Zusatzmaterial 38 über einen eigenen Stromkreis, insbesondere über die Stromquelle 39, erwärmt, so daß bei Zuführung des Zusatzwerkstoffes 38 die geringe Lichtbogenleistung des Lichtbogens 15 bzw. des Arbeitslichtbogens ausreichend ist, um gleichzeitig das Grundmaterial entsprechend zu erwärmen und die noch fehlende Wärmeenergie für die Verflüssigung des Zusatzwerkstoffes 38 zur Verfügung zu stellen. Damit ist es möglich, daß mit einem derartigen Aufbau mit einem Schweißbrenner ein Schweißprozeß, bei dem das Grundmaterial der Werkstücke 16 aufgeschmolzen wird und der Schweißdraht 13 entsprechend abgeschmolzen wird, und ein Lötprozeß, bei dem ein Zusatzwerkstoff 38 zugeführt und aufgeschmolzen wird, durchgeführt werden kann. Hierzu muß lediglich eine entsprechende Steuerung des Zusatzwerkstoffes 38 und der Schweißparameter vorgenommen werden, d.h., daß bei einem Schweißprozeß der Zusatzwerkstoff 38 außerhalb des Schweißbereiches bzw. des Verbindungsbereiches 37 geschwenkt oder gefördert wird und eine Erhöhung der Schweißparameter zum Abschmelzen des Schweißdrahtes 13 durchgeführt wird, wogegen beim Lötprozeß eine entsprechende Steuerung bzw. Regelung, wie zuvor bzw. in Fig. 2 beschrieben, durchgeführt wird.

Damit kann mit nur einem Brenner 10 bzw. mit nur einer Schweiß-/Lötanlage, beispielsweise bei einem Einsatz in einer Fertigungsstraße für den Automobilbau, beide unterschiedlichen Verfahren, also ein Schweißprozeß und ein Lötprozeß, aufeinanderfolgend durchgeführt werden und es müssen nicht zwei getrennte Anlagen, wie dies derzeit der Fall ist, eingesetzt werden, d.h. daß beispielsweise beim Karosseriebau zuerst sämtliche Lötverbindungen mit dem Brenner 10 und anschließend die Schweißverbindungen oder umgekehrt an derselben Karosserie mit dem selben Brenner 10 bzw. mit der selben Schweiß-/Lötanlage durchgeführt werden. Hierzu ist es lediglich notwendig, daß zu den entsprechenden Verfahren die einzelnen Parameter programmiert bzw. eingestellt werden müssen.

Selbstverständlich ist es möglich, daß bei einem Einsatz eines Zwei- oder Mehrdraht-Brenners 10, bei dem die einzelnen zugeführten Schweißdrähte 13 jeweils einen eigenen Stromkreis aufweisen, dieser derart gesteuert bzw. geregelt werden kann, daß ein Schweißdraht 13 die Elektrode, bei der die Lichtbogenleistung derart geregelt wird, daß keine abschmelzend erfolgt, ausbildet und der oder die weiteren Schweißdrähte 13 als Zusatzwerkstoff 38, die über den Stromkreis erwärmt werden, betrieben werden. Dabei ist es auch möglich, daß ein Schweißdraht 13 durch eine nicht abschmelzende Elektrode ersetzt werden kann. Somit kann ein Brenner 10 verwendet werden, bei dem sämtliche zugeführten Drähte, insbesondere Schweißdrähte 13 oder Zusatzwerkstoffe 38, innerhalb des Brenners 10 angeordnet sind. Es ist auch möglich, daß mit einem derartigen Brenner 10 wiederum ein Schweißprozeß und ein Lötprozeß bei entsprechender Einstellung der Schweißparameter durchgeführt wird, wie dies zuvor beschrieben wurde.

Der Ordnung halber sei abschließend darauf hingewiesen, daß zum besseren Verständnis des Aufbaus des Schweißgerätes 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Brenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Plasmadüse
- 28: Elektrode
- 29: Kanal
- 30: Pfeil

- 31: Gasdüse
- 32: Kanal
- 33: Pfeil
- 34: Potential
- 35: Potential

- 36: Schaltvorrichtung
- 37: Verbindungsbereich
- 38: Zusatzwerkstoff
- 39: Stromquelle
- 40: Potential

- 41: Potential
- 42: Schmelzbad
- 43: Kontaktbuchse

## Patentansprüche

1. Verfahren zum Löten von Werkstücken mit einem Brenner, insbesondere einem Plasma- oder Schweißbrenner, mit einer Elektrode, bei dem ein übertragener und/oder nicht übertragener Arbeitslichtbogen, der von einer Energiequelle bzw. einer Stromquelle mit Energie gespeist wird, zur Erzeugung eines Plasmastrahls aus einem zugeführten Plasmagas aufgebaut wird, wobei zumindest ein Zusatzwerkstoff in den Verbindungsbereich der zu verbindenden Werkstücke zugeführt wird, **dadurch gekennzeichnet, daß** der Zusatzwerkstoff (38) mit der oder einer weiteren Energiequelle bzw. Stromquelle (2, 39) verbunden wird und hierzu ein Potential (34, 35, 40, 41) der Energiequelle bzw. Stromquelle (2, 39) an dem Zusatzwerkstoff (38) und das weitere Potential (34, 35, 40, 41) an den Werkstücken (16) angelegt wird, wobei die Energiequelle bzw. Stromquelle (2, 39), insbesondere die Energiezufuhr der Energiequelle bzw. Stromquelle (2, 39), derart geregelt wird, daß beim Abheben des Zusatzwerkstoffes (38) vom Werkstück (16) eine Zündung eines Lichtbogens unterbunden wird.

2. Verfahren nach Anspruch 1, **dadurch gekennzeichnet, daß** der Zusatzwerkstoff (38) während des Lötprozesses mit dem Werkstück (16) bzw. einem Schmelzbad (42) kontaktiert wird.

3. Verfahren nach Anspruch 1 oder 2, **dadurch gekennzeichnet, daß** bei Verwendung einer einzigen Stromquelle (2 oder 39) diese derart ausgebildet wird, daß diese zwei getrennt voneinander regelbare bzw. steuerbare Energiekreise aufweist.

4. Verfahren nach einem oder mehreren der vorhergehenden Ansprüche, **dadurch gekennzeichnet, daß** der Zusatzwerkstoff (38) mit Energie, insbesondere mit einem einstellbaren, konstanten oder gepulsten Strom, derart beaufschlagt wird, daß eine Erwärmung des Zusatzwerkstoffes (38) bis knapp unter dessen Schmelztemperatur erreicht wird.

5. Verfahren nach einem oder mehreren der vorhergehenden Ansprüche, **dadurch gekennzeichnet, daß** durch die gezielte Wärmeeinbringung in den Zusatzwerkstoff (38) die Energieversorgung des Arbeitslichtbogens, insbesondere eine Plasmalichtbogenleistung, auf einen Wert reduziert wird, bei dem vorwiegend eine Erwärmung des Grundmaterials der Werkstücke (16) und nur mehr eine Restenergie für das vollständige Schmelzen des Zusatzwerkstoffes (38) geliefert wird.

6. Verfahren nach einem oder mehreren der vorhergehenden Ansprüche, **dadurch gekennzeichnet, daß** die Energieversorgung des Arbeitslichtbogens, insbesondere die Plasmalichtbogenleistung, derart geregelt wird, daß keine Aufschmelzung des Grundmaterials der Werkstücke (16) erfolgt.

7. Verfahren nach einem oder mehreren der vorhergehenden Ansprüche, **dadurch gekennzeichnet, daß** der Zusatzwerkstoff (38) in Form von einem oder mehreren Drähten, insbesondere einem oder mehreren endlosen Schweißdrähten (13), zugeführt wird.

8. Verfahren nach einem oder mehreren der vorhergehenden Ansprüche, **dadurch gekennzeichnet, daß** der Zusatzwerkstoff (38) mit konstanter oder pulsförmiger Drahtfördergeschwindigkeit gefördert wird.

9. Verfahren nach einem oder mehreren der vorhergehenden Ansprüche, **dadurch gekennzeichnet, daß** der Schmelzpunkt des Zusatzwerkstoffes (38) gleich oder höher ist als der des Grundmaterials der Werkstücke (16).

10. Verfahren nach einem oder mehreren der vorhergehenden Ansprüche, **dadurch gekennzeichnet, daß** als Elektrode (28) ein abschmelzender Schweißdraht (13) eingesetzt wird, wobei die Energieversorgung des Schweißdrahtes (13) derart geregelt wird, daß eine Abschmelzung des Schweißdrahtes (13) verhindert wird.

## Claims

1. Method for soldering work pieces with a torch, in particular a plasma or welding torch, having an electrode, in which a transmitted and/or non-transmitted working arc, supplied with power from a power source or a current source, is produced in order to generate a plasma beam from a delivered plasma gas, whereby at least one filler material is fed to the seam region of the work pieces to be joined, **characterised in that** the filler material (38) is connected to the or to another power source or current source (2, 39) and to this end one potential (34, 35, 40, 41) of the power source or current source (2, 39) is applied to the filler material (38) and the other potential (34, 35, 40, 41) to the work pieces (16), and the power source or current source (2, 39), in particular the power delivered by the power source or current source (2, 39), is regulated in such a way that when the filler material (38) is lifted off the work piece (16) an arc is prevented from being struck.

2. Method as claimed in claim 1, **characterised in that** the filler material (38) is placed in contact with the work piece (16) or a pool of melt (42) during the soldering process.

3. Method as claimed in claim 1 or 2, **characterised in that** if a single current source (2 or 39) is used, it is set up so as to have two power circuits which can be controlled and regulated separately from one another.

4. Method as claimed in one or more of the preceding claims, **characterised in that** the filler material (38) is supplied with power, in particular with a variable, constant or pulsed current, in such a way that the filler material (38) is heated to just below its melting temperature.

5. Method as claimed in one or more of the preceding claims, **characterised in that** by applying a specific amount of heat to the filler material (38), the power supply of the working arc, in particular the plasma arc power, can be reduced to a value at which it is predominantly the base material of the work pieces (16) which is heated and only a residual amount of energy needed to fully melt it is applied to the filler material (38).

6. Method as claimed in one or more of the preceding claims, **characterised in that** the power supply of the working arc, in particular the plasma arc power, is regulated in such a way that the base material of the work pieces (16) does not melt.

7. Method as claimed in one or more of the preceding claims, **characterised in that** the filler material (38) is fed in the form of one or more wires, in particular one or more endless welding wires (13).

8. Method as claimed in one or more of the preceding claims, **characterised in that** the filler material (38) is fed at a constant or pulsed wire feed rate.

9. Method as claimed in one or more of the preceding claims, **characterised in that** the melting point of the filler material (38) is the same as or higher than the base material of the work pieces (16).

10. Method as claimed in one or more of the preceding claims, **characterised in that** a consumable welding wire (13) is used as an electrode (28) and the power supply of the welding wire (13) is regulated in such a way that the welding wire (13) is prevented from melting.

## Revendications

1. Procédé de brasage de pièces avec un chalumeau, en particulier un chalumeau à plasma ou à souder, avec une électrode, dans lequel un arc électrique de travail transmis et/ou non-transmis qui est alimenté par une source d'énergie respectivement une source de courant en énergie, est formé pour produire un jet de plasma à partir d'un gaz de plasma amené, où au moins un matériau additionnel est amené dans la zone de liaison des pièces à relier, **caractérisé en ce que** le matériau additionnel (38) est relié à la ou une autre source d'énergie respectivement source de courant (2, 39) et que, à cette fin, un potentiel (34, 35, 40, 41) de la source d'énergie respectivement de la source de courant (2, 39) est appliqué au matériau additionnel (38) et l'autre potentiel (34, 35, 40, 41) aux pièces (16), où la source d'énergie respectivement la source de courant (2, 39), en particulier l'amenée d'énergie de la source d'énergie respectivement de la source de courant (2, 39) est réglée de façon que lors du relevage du matériau additionnel (38) de la pièce (16), un allumage d'un arc électrique est empêché.

2. Procédé selon la revendication 1, **caractérisé en ce que** le matériau additionnel (38) est mis en contact pendant le procédé de brasage avec la pièce (16) respectivement avec un bain de fusion (42).

3. Procédé selon la revendication 1 ou 2, **caractérisé en ce que** lors de l'utilisation d'une seule source de courant (2 ou 39), celle-ci est réalisée de façon à présenter deux circuits d'énergie pouvant être réglés ou commandés séparément l'un de l'autre.

4. Procédé selon l'une ou plusieurs des revendications précédentes, **caractérisé en ce que** le matériau additionnel (38) est chargé en énergie, en particulier d'un courant réglable, constant ou pulsé de façon à atteindre un échauffement du matériau additionnel (38) presque jusqu'à sa température de fusion.

5. Procédé selon l'une ou plusieurs des revendications précédentes, **caractérisé en ce que** par l'amenée ciblée de la chaleur dans le matériau additionnel (38), l'alimentation en énergie de l'arc électrique de travail, en particulier la puissance de l'arc électrique au plasma, est réduite à une valeur à laquelle est fourni essentiellement un échauffement du matériau de base des pièces (16) et seulement encore une énergie restante pour la fusion complète du matériau additionnel (38).

6. Procédé selon l'une ou plusieurs des revendications précédentes, **caractérisé en ce que** l'alimentation en énergie de l'arc électrique de travail, en particulier la puissance de l'arc électrique au plasma, est réglée de façon qu'il n'y a pas de fusion du matériau de base des pièces (16).

7. Procédé selon l'une ou plusieurs des revendications précédentes, **caractérisé en ce que** le matériau additionnel (38) est amené sous la forme d'un ou de plusieurs fils, en particulier d'un ou de plusieurs fils d'apport sans fin (13).

8. Procédé selon l'une ou plusieurs des revendications précédentes, **caractérisé en ce que** le matériau additionnel (38) est convoyé à une vitesse de convoyage de fil constante ou pulsée.

9. Procédé selon l'une ou plusieurs des revendications précédentes, **caractérisé en ce que** le point de fusion du matériau additionnel (38) est égal ou supérieur à celui du matériau de base des pièces (16).

10. Procédé selon l'une ou plusieurs des revendications précédentes, **caractérisé en ce que**, comme électrode (28), un fil d'apport de fusion (13) est utilisé, où l'alimentation en énergie du fil d'apport (13) est réglée de façon à empêcher une fusion du fil d'apport (13).
